# EUROPÄISCHE PATENTSCHRIFT

(11) **EP 1 692 018 B1**
(45) Veröffentlichungstag und Bekanntmachung des Hinweises auf die Patenterteilung: **05.03.2008**
(21) Anmeldenummer: 04790802.5
(22) Anmeldetag: 23.10.2004
(51) Int. Cl.: B60R 21/01, B60N 2/00

(54) **KOMBINIERTES SENSOR- UND HEIZELEMENT**
COMBINED SENSOR AND HEATING ELEMENT
ELEMENT DE DETECTION ET DE CHAUFFAGE COMBINE

(30) Priorität: 12.12.2003 DE 10358793
(43) Veröffentlichungstag der Anmeldung: 23.08.2006
(73) Patentinhaber: Carl Freudenberg KG, 69469 Weinheim (DE)
(72) Erfinder: FRANK, Thorsten, 69469 Weinheim (DE)
(86) Internationale Anmeldenummer: PCT/EP2004/012011
(87) Internationale Veröffentlichungsnummer: WO 2005/061282

(56) Entgegenhaltungen:
- EP-A- 0 873 903
- EP-A- 1 209 026
- LU-A1- 90 583
- US-A1- 2002 000 742
- US-B1- 6 371 552

## Beschreibung

### Technisches Gebiet

Die vorliegende Erfindung betrifft ein kombiniertes Sensor- und Heizelement, insbesondere für den Sitz eines Kraftfahrzeugs, umfassend eine Sensormatte mit einer Heizleiteranordnung.

### Stand der Technik

Ein kombiniertes Sensor- und Heizelement der eingangs genannten Art ist aus der LU 90 583 A1 bekannt. Das bekannte kombinierte Sensor- und Heizelement betrifft die Kombination sogenannter Sitzbelegungserkennungssensoren, die üblicherweise dazu eingesetzt werden, bei einem Unfall ein Auslösen des einem bestimmten Fahrzeugsitzes zugeordneten Airbaigs zu verhindern, falls der entsprechende Fahrzeugsitz nicht belegt ist, mit einer Sitzheizung. Die in dem Dokument beschriebenen Sitzbelegungserkennungssensoren umfassen eine Sensormatte mit mehreren druckseniblen Bereichen, die untereinander durch flexible Verbindungsstreifen verbunden sind. Die Sensormatte wird nach dem Dokument derart auf dem Fahrzeugsitz positioniert, dass die drucksensiblen Bereiche über die Sitzfläche des Fahrzeugsitzes verteilt sind.

Eine Sitzheizung eines Kraftfahrzeuges umfaßt im Allgemeinen eine Heizmatte mit zwei Vliesstofflagen und einem zwischen den beiden Vliesstofflagen eingebetteten Heizlager. Auch eine solche Heizmatte wird auf der Sitzfläche des Fahrzeugsitzes so angeordnet, dass sich der Heizleiter im Wesentlichen über die gesamte Sitzfläche des Fahrzeugsitzes erstreckt.

Bei Fahrzeugsitzen, die sowohl mit einem Sitzbelegungssensor als auch mit einer Sitzheizung ausgestattet werden, werden die Sensormatte und die Heizmatte vor dem Einbau in den Sitz zu einem kombinierten Sensor- und Heizelement zusammengefügt. Die Herstellung eines solchen kombinierten Sensor- und Heizelementes ist jedoch verhältnismäßig aufwendig, da die beiden Funktionselemente zunächst getrennt hergestellt und anschließend aufeinander fixiert werden müssen.

Die LU 90 583 A1 schlägt daher vor, die Heizleiter nicht gesondert in ein handhabbares Vlieslaminat einzubetten, das dann anschließend auf der Sensormatte fixiert werden muss, sondern direkt auf die flexiblen Verbindungsstreifen der Sensormatte aufzubringen. Die Herstellung eines solchen kombinierten Sensor- und Heizelements soll demnach wesentlich weniger Einzelschritte als die Herstellung herkömmlicher Kombielemente erforderlich machen. Überdies soll der Materialaufwand für ein solches kombiniertes Sensor- und Heizelement wesentlich geringer sein, als dies bei herkömmlichen Funktionselementen der Fall ist.

### Darstellung der Erfindung

Aufgabe der Erfindung ist, ein kombiniertes Sensor- und Heizelement der bekannten Art so weiter zu entwickeln, dass die Herstellung noch weiter vereinfacht und der Materialaufwand noch weiter verringert wird. Diese Aufgabe wird gelöst mit einem kombinierten Sensor- und Heizelement mit allen Merkmalen des Patentanspruchs 1. Ein Fahrzeugsitz, welcher ein kombiniertes Sensor- und Heizelement gemäß der Erfindung umfaßt, wird in Patentanspruch 18 beschrieben. Die Patentansprüche 21 und 22 betreffen Verfahren zur Herstellung eines erfindungsgemäßen Sensor- und Heizelements. Bevorzugte Ausgestaltungen der Erfindung sind in den Unteransprüchen beschrieben.

Gemäß der Erfindung ist bei einem kombinierten Sensor- und Heizelement, das insbesondere für den Sitz eines Kraftfahrzeugs geeignet ist und eine Sensormatte mit einer Heizleiteranordnung umfaßt, vorgesehen, dass die Sensormatte als flexible Leiterbahnfolie ausgebildet ist, welche eine Trägerfolie und auf der Oberfläche der Trägerfolie angeordnete Leiterbahnen einer Sensoranordnung umfasst, und dass die Heizleiter der Heizleiteranordnung auf der gleichen Trägerfolienoberfläche zwischen bzw. neben den Leiterbahnen der Sensoranordnung angeordnet sind.

Das erfindungsgemäße, kombinierte Sensor- und Heizelement zeichnet sich demnach gegenüber dem bekannten Kombielement durch einen wesentlich vereinfachten Aufbau aus. Die beiden Funktionselemente Sensormatte und Heizung sind nicht wie bei dem bekannten Kombielement in unterschiedlichen Ebenen über- bzw. untereinander angeordnet, sondern in ein- und derselben Ebene, wobei unter Ebene im Sinne der Erfindung nicht notwendigerweise "plan" verstanden werden soll. Die gleiche Ebene ist im Rahmen der vorliegenden Erfindung so zu verstehen, dass die Leiterbahnen beider Funktionselemente auf ein- und derselben gegebenenfalls auch gewölbten (beispielsweise beim Einbau in einen Fahrzeugsitz) Oberfläche einer Trägerfolie aufgebracht werden. Vorzugsweise sind sie beabstandet zueinander angeordnet, damit auch ohne weitere Maßnahmen das Zustandekommen eines elektrischen Kontakts sicher vermieden wird. Die vorliegende Erfindung ist jedoch nicht auf diese Ausgestaltung beschränkt. Soweit an den Kreuzungspunkten für eine ausreichende Isolierung gesorgt ist, sind auch Überkreuzungen der Leiterbahnen denkbar. Solche Isolierungen können beispielsweise durch Aufbringen eines Decklacks oder einer Isolierfolie realisiert werden. Es liegt auf der Hand, dass in die Leiterbahnanordnung auf der Trägerfolienoberfläche auch noch die Verdrahtung des kombinierten Sensor- und Heizelements, beispielsweise zur Auswerte- und/oder Versorgungselektronik, integriert sein kann.

Durch den vereinfachten Aufbau eines erfindungsgemäßen kombinierten Sensor- und Heizelements (Kombielement) mit gegenüber dem Stand der Technik deutlich reduzierter Anzahl an Bauteilen wird auch das Herstellungsverfahren wesentlich vereinfacht sowie eine weitere Materialersparnis erzielt. Dadurch, dass ebenfalls die Zahl der Prozessschritte bei der Herstellung reduziert werden konnte, sinkt auch das Risiko, dass Prozessfehler auftreten. Dies führt insgesamt zu einer Qualitätsverbesserung. Das erfindungsgemäße Kombielement ist somit in einfacher Weise und kostengünstig herzustellen. Insbesondere können, wie nachfolgend noch beschrieben wird, bekannte Prozesse zur Herstellung eines erfindungsgemäßen Kombielementes eingesetzt werden.

In einer bevorzugten Ausführungsform der Erfindung umfaßt die Sensoranordnung Sitzbelegungserkennungssensoren. Unter Sitzbelegungssensoren sind im weitesten Sinne alle Sensortypen zu verstehen, die in der Lage sind, bei Belegung eines Sitzes mit einer Person ein Signal erzeugen. Eine bekannte Gruppe von Sitzbelegungssensoren sind beispielsweise die sog. Drucksensoren. Drucksensoren sind an sich bekannt und in der Literatur vielfach beschrieben. Ihre Wirkungsweise beruht im Wesentlichen auf der Änderung elektrischer Eigenschaften durch Einwirkung einer auf den Sensor ausgeübten Gewichtskraft. Hierbei kann es sich beispielsweise um die Herstellung einer elektrisch leitfähigen Verbindung durch Druckausübung auf den Sensor, aber auch um die Änderung einer elektrischen Kapazität bei einer Abstandsänderung durch Druckausübung handeln. Im Rahmen der vorliegenden Erfindung können sowohl einfache Sitzbelegungserkennungssensoren, die lediglich zwischen den Zuständen "belegt" und "nicht belegt" unterscheiden können, zum Einsatz kommen, als auch Sensoren, die zur Aufnahme beziehungsweise Auswertung eines Druckprofils geeignet sind.

In einer weiteren bevorzugten Ausführungsform der Erfindung wird das Ausgangssignal der Sitzbelegungserkennungssensoren zur Schaltung und/oder Steuerung der Heizleiteranordnung eingesetzt. Diese Ausführungsform eignet sich insbesondere zur Realisierung einer Sitzheizung mit variabler Heizfläche, bei der die Heizfläche in unterschiedliche Zonen unterteilt ist, die unabhängig voneinander schalt- und steuerbar sind. So kann beispielsweise vorgesehen sein, dass nur diejenigen Flächenbereiche geheizt werden, die in unmittelbarer Körperberührung mit dem Sitzenden stehen, während die nicht berührten Flächenbereiche nicht geheizt werden. Da es hinsichtlich der Körperausmaße der Menschen große Unterschiede gibt, sind die Körperberührungsflächen auch unterschiedlich groß, so dass sich die für eine effektive Heizung erforderlichen Heizflächen bei verschiedenen Personen unterscheiden. Die vorliegende Erfindung erlaubt somit eine intelligente Sitzheizung, bei der nur die wirklich benötigten Flächen beheizt werden, was zu einer erheblichen Energieeinsparung führt.

Neben der einfachen Variante des einfachen Ein-/Ausschaltens bei Belegung bzw. Nichtbelegung von Flächenbereichen eines Sitzes ist es im Rahmen der vorliegenden Erfindung weiterhin möglich, vorgegebene Wärmeprofile, die das Wohlbefinden einer auf dem Sitz befindlichen Person dadurch steigern, dass bestimmte Körperpartien stark, schwach oder nicht beheizt werden, ggf. zeitlich veränderlich, einzustellen.

Das Ausgangssignal der Sitzbelegungserkennungssensoren kann aber zusätzlich auch noch, wie aus dem Stand der Technik bekannt, zur Air-Bag-Steuerung eingesetzt werden.

Die vorliegende Erfindung erlaubt auch in einfacher Weise die Integration von Schaltern, die von einer im Fahrzeug befindlichen Person bedient werden können. Diese können beispielsweise in Form eines Bedien-Panels seitlich am Fahrzeugsitz vorgesehen sein. Als Schalter geeignet sind beispielsweise alle Sitzbelegungserkennungssensoren, die neben der Sitzbelegungserkennungsfunktion noch eine Schaltfunktion besitzen. Diese lassen sich in einfacher Weise in einem Arbeitsschritt mit den Sensoren auf die Trägerfolie aufbringen.

Vorzugsweise werden als Drucksensoren sogenannte Folienschalter, wie zum Beispiel die sogenannten Domschalter verwendet. Folienschalter an sich sind bekannt. Sie bestehen in der Regel aus einem auf einer Trägerfolie angeordneten Elektrodenpaar, über welchem eine Kontaktfläche, die beispielsweise als Dom ausgebildet sein und z. B. aus Kunststoff, insbesondere Polyester, oder auch Metall bestehen kann, angeordnet ist. Die Kontaktfläche bzw. der Dom können mit einer der beiden Elektroden elektrisch leitend verbunden sein. Bei Kontaktflächen bzw. Domen aus nicht-leitendem Werkstoff, wie Polyester, können auch im Bereich der Kontaktfläche bzw. des Domes elektrisch leitende Verbindungselemente vorgesehen sein, die bei Betätigung durch die Kontaktfläche bzw. den Dom den elektrischen Kontakt herstellen. Die Betätigung erfolgt durch Druckbeaufschlagung. Dabei wölbt sich die Kontaktfläche bzw. der Dom oder die Schaltung auf der Kontaktfläche oder dem Dom nach innen und stellt den Kontakt zur zweiten Elektrode bzw. zwischen zwei zu verbindenden Elektroden her. Folienschalter zeichnen sich somit durch einen relativ einfachen Aufbau aus und sind ebenfalls kostengünstig herzustellen. Es können aber auch sog. "Flat Switches" , so wie sie in der LU 90 583 A1 beschrieben sind, zur Anwendung kommen.

Anstelle der Sitzbelegungserkennungssensoren kann auch eine Sensoranordnung bestehend aus Temperatursensoren vorgesehen sein. Ebenso ist eine Kombination aus Sitzbelegungserkennungssensoren und Temperatursensoren möglich.

Vorzugsweise bestehen die Leiterbahnen aus Kupfer oder aber auch aus Silber oder Carbon, erzeugt durch Leitpastendruck. Vorteilhafterweise wird für die Heizleiter- und die Sensoranordnung der gleiche Werkstoff verwendet. Es ist aber auch möglich, dass die Leiterbahnen für die Heizleiter- und die Sensoranordnung aus unterschiedlichen Materialien bestehen. Die Verwendung des gleichen Materials für beide Funktionselemente hat den Vorteil der einfacheren Herstellbarkeit.

Zweckmäßigerweise werden die Heizleiter- und die Sensoranordnung auf der Trägerfolie mittels einer Schutzschicht abgedeckt. Die Schutzschicht kann sowohl eine Kunststoffolie als auch, wenn beispielsweise wenn eine textile Gestaltung der Oberfläche gewünscht ist, eine Vliesstofflage umfassen. Die Verwendung einer Vliesstofflage hat den Vorteil, dass neben der Schutzwirkung auch eine gewünschte Steifigkeit eingestellt werden kann. Es kann aber auch eine Kombination aus Kunststoff- und Vliesstofflagen oder ein weiterführender mehrlagiger Aufbau vorgesehen sein.

Die Trägerfolie umfasst in der Regel eine flexible Kunststoffolie, beispielsweise aus Pl (Polyimid), PEN (Polyethylennaphthalat) oder PET (Polyethylenterephthalat).

Der Aufbau eines kombinierten Sensor- und Heizelements vereinfacht sich noch dadurch wesentlich, dass die elektrischen Anschlüsse der Heizleiter- und der Sensoranordnung so auf der Trägerfolie angeordnet sind, dass sie an dem gleichen Anschlußstecker anschließbar sind. Insbesondere ist es auch vorteilhaft, wenn die Heizleiter- und die Sensoranordnung an einer gemeinsamen Auswerte- und Versorgungselektronik anschließbar sind.

In einer weiteren bevorzugten Ausführungsform der Erfindung können in das kombinierte Sensor- und Heizelement Schalter, Dioden und/oder Elektronikbauteile integriert werden

Ein erfindungsgemäßes kombiniertes Sensor- und Heizelement ist insbesondere zum Einsatz bei einem Sitz für ein Kraftfahrzeug geeignet, wobei im einfachsten Fall nur eine Heizzone vorgesehen sein kann. Eine intelligente Sitzheizung mit variabler Heizfläche setzt voraus, dass die Heizleiter und die zugeordneten Sensoren auf der Sitzfläche und/oder der Lehne des Fahrzeugsitzes so angeordnet sind, dass sie voneinander unabhängig schalt- und steuerbare Heizzonen bilden. Eine besonders effiziente Beheizung eines Fahrzeugsitzes wird dadurch erzielt, dass die Heizzonen der Kontur eines auf dem Sitz befindlichen menschlichen Körpers angepaßt sind.

Das erfindungsgemäße kombinierte Sensor- und Heizelement ist jedoch nicht t auf die obige Anwendung beschränkt. Insbesondere die Möglichkeit der Aufteilung in unabhängig voneinander schalt- und steuerbare Zonen, deren geometrische Gestalt in einfacher Weise an den jeweiligen Anwendungsfall angepasst werden kann, eröffnet vielfältige Einsatzmöglichkeiten.

Ein erfindungsgemäßes kombiniertes Sensor- und Heizelement wird vorzugsweise mittels des nachfolgend beschriebenen Verfahrens hergestellt.

In einem ersten Verfahrensschritt wird auf eine Trägerfolie, beispielsweise eine flexible Kunststoffolie eine Beschichtung aus einem Leiterbahnmaterial aufgebracht. Vorzugsweise wird das Leiterbahnmaterial, das besonders bevorzugt aus Kupfer besteht, auf den Träger auflaminiert. Anschließend wird auf die Leiterbahnbeschichtung eine Ätzresistbeschichtung aufgedruckt. Diesem Schritt kann gegebenenfalls noch die Reinigung und Anätzung der Leiterbahnbeschichtung vorausgehen. Der Ätzresist wird in einem Muster aufgebracht, das dem gewünschten Leiterbild entspricht. Das Leiterbild kann gemäß einer bevorzugten Ausführungsform der Erfindung auch die Verdrahtung des kombinierten Sensor- und Heizelements nach außen, beispielsweise zur Auswerte- oder Versorgungselektronik, umfassen. In dem sich nun anschließenden Ätzprozess wird die Leiterbahnbeschichtung in den von dem Ätzresist nicht bedeckten Bereichen bis auf die flexible Trägerfolie hinunter weggeätzt. Der Ätzprozess erfolgt vorzugsweise in saurer Lösung. Hierzu sind beispielsweise Salzsäure (HCl), Wasserstoffperoxyd (H₂O₂) oder eine Kupferchlorid (CuCl₂)-Lösung geeignet. Nach dem Entfernen des Resist durch Spülen mit einer alkalischen Lösung, dem sogenannten Strippen, liegt die fertige Leiterbahnstruktur auf der Trägerfolie vor. In einem weiteren Verfahrensschritt kann schließlich eine Schutzschicht, beispielsweise aus Kunststoffolie und/oder aus einer Vliesstofflage, aufgebracht, vorzugsweise auflaminiert, werden.

Ein weiteres Verfahren zur Herstellung der Leiterbahnstruktur ist ein Leitpastendruck, z. B. Silber- oder Carbondruck. Kommt ein solches Verfahren zur Anwendung entfallen der Ätz- und Stripp-Prozeß. Es können aber auch ein Beschichtungs- und Ätzverfahren, wie oben beschrieben, und ein Leitpastendruckverfahren in Kombination zur Anwendung kommen.

Bei den beschriebenen Verfahren handelt es sich um bekannte und erprobte Verfahren zur Herstellung gedruckter Schaltungen. Diese bekannten Verfahren erlauben in besonders einfacher und kostengünstiger Weise die Herstellung eines erfindunsgemäßen kombinierten Sensor- und Heizelements. Insbesondere die Herstellung der Leiterbahnen für die Heizleiter- und die Sensoranordnung in ein- und demselben Prozeßschritt führt zu einer wesentlichen Verfahrensvereinfachung gegenüber dem bekannten Kombielement.

### Kurzbeschreibung der Zeichnung

Nachfolgend wird die Erfindung anhand der Figuren näher beschrieben.

Es zeigen:
- Figur 1: Eine bevorzugte Ausführungsform für ein erfindungsgemäßes Sensor- und Heizelement;
- Figur 2: Eine weitere bevorzugte Ausführungsform für ein erfindungsgemäßes Sensor- und Heizelement mit vier unabhängig voneinander schalt- und steuerbaren Heizzonen;
- Figur 3: In einem Ablaufdiagramm die wichtigsten Prozeßschritte eines bevorzugten Verfahrens zur Herstellung eines erfindungsgemäßen Sensor- und Heizelements.

### Ausführung der Erfindung

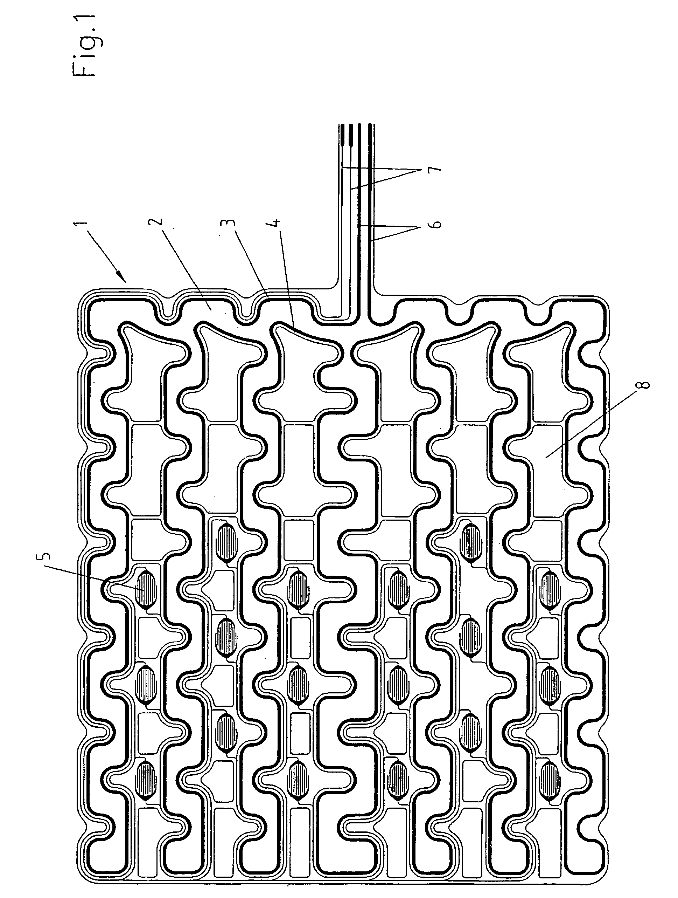

Mann erkennt in Figur 1 ein erfindungsgemäßes kombiniertes Sensor- und Heizelement 1. Dieses kombinierte Sensor- und Heizelement 1 weist eine flexible Trägerfolie 2 auf, auf der eine Heizleiterbahnanordnung sowie eine Sensorleiterbahnanordnung aufgebracht sind. Sowohl die Leiterbahnen 3 der Heizleiteranordnung als auch die Leiterbahnen 4 der Sensoranordnung decken den gesamten Flächenbereich des kombinierten Sensor- und Heizelements 1 vollständig ab. Sie sind hierzu wellenförmig bzw. mäanderförmig über die Fläche geführt. Die vorliegende Erfindung ist jedoch keinesfalls auf diese geometrische Anordnung der Leiterbahnen (3, 4) beschränkt. Denkbar ist jede geometrische Anordnung der Leiterbahnen (3, 4), die eine Abdeckung großer Flächenbereiche gewährleistet. Die Leiterbahnen (3) in Fig. 1 weisen zwischen ihren Anschlussenden 6 keinerlei Verzweigungen auf, so dass sich bei Beaufschlagung mit elektrischer Leistung eine gezielte Stromführung ergibt.

Man erkennt weiterhin als Bestandteil eines drucksensiblen Sensors, beispielsweise eines Domschalters, Elektrodenanordnungen 5, die ebenfalls über die Fläche des kombinierten Sensor- und Heizelements 1 verteilt angeordnet sind. In dem dargestellten Ausführungsbeispiel sind die Elektrodenpaare 5 als kammartig ineinander greifende Strukturen ausgebildet. Diese kammartigen Strukturen bilden ohne Beschränkung der Allgemeinheit die Basis eines Domschalters. Die kammartige Struktur gewährleistet, dass bei Niederdrücken des über der Struktur befindlichen Doms auf jeden Fall ein elektrischer Kontakt hergestellt wird.

Die elektrischen Anschlüsse 6, 7 für die Leiterbahnen 3 der Heizleiteranordnung und die Leiterbahnen 4 der Sensoranordnung werden ohne Beschränkung der Allgemeinheit an der selben Stelle des erfindungsgemäßen kombinierten Sensor- und Heizelements aus der Trägerfolie 2 herausgeführt, so dass sie an einen gemeinsamen Anschlußstecker anschließbar sind.

In den nicht mit Sensoren 5 belegten Bereichen zwischen den Leiterbahnen 3, 4 kann das Trägerfolienmaterial, wie in der Figur dargestellt, in vorgegebenen Flächenbereichen 8 ausgestanzt werden. Dies hat den Vorteil, dass die Flexibilität, aber auch die Dehnbarkeit erhöht wird. Ein weiterer Vorteil ist, dass in den ausgestanzten Bereichen eine Sitzklimatisierung möglich ist.

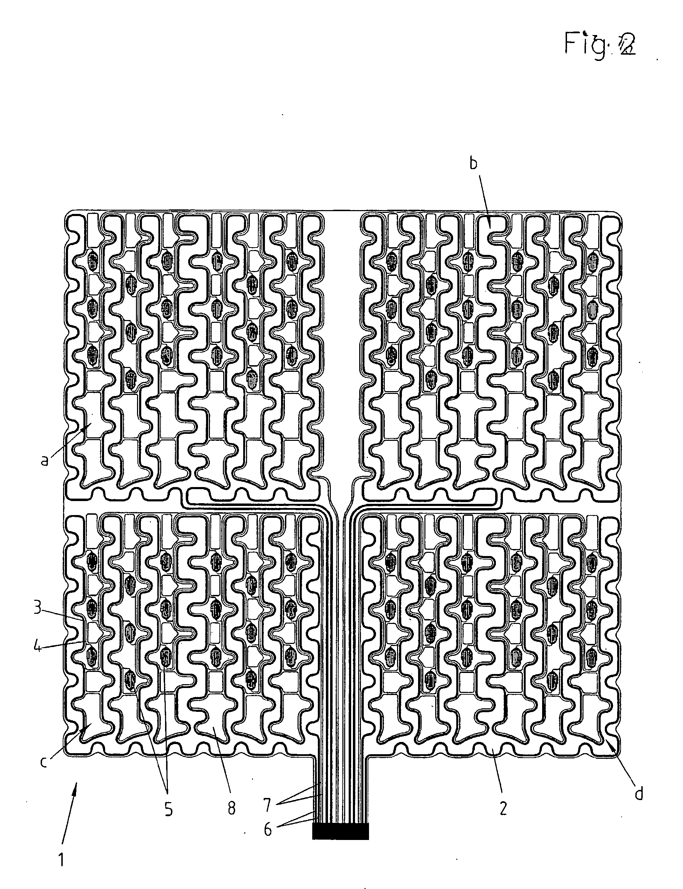

Das in Fig. 1 dargestellte erfindungsgemäße kombinierte Sensor- und Heizelement zeichnet sich zur besseren Übersichtlichkeit durch eine einzige Heizzone aus, die mittels der Sensoranordnung 5 schalt- und steuerbar ist. In Fig. 2 sind beispielhaft und ohne Beschränkung der Allgemeinheit vier solcher Heizzonen (a, b, c, d), die unabhängig voneinander schalt- und steuerbar sind, zu einer variablen Heizfläche kombiniert. Man erkennt ohne weiteres, dass eine intelligente Sitzheizung mit variabler Heizfläche z. B. durch einfaches Aneinanderfügen mehrere Heizzonen, wobei die Außenkontur frei gewählt werden kann, realisierbar ist.

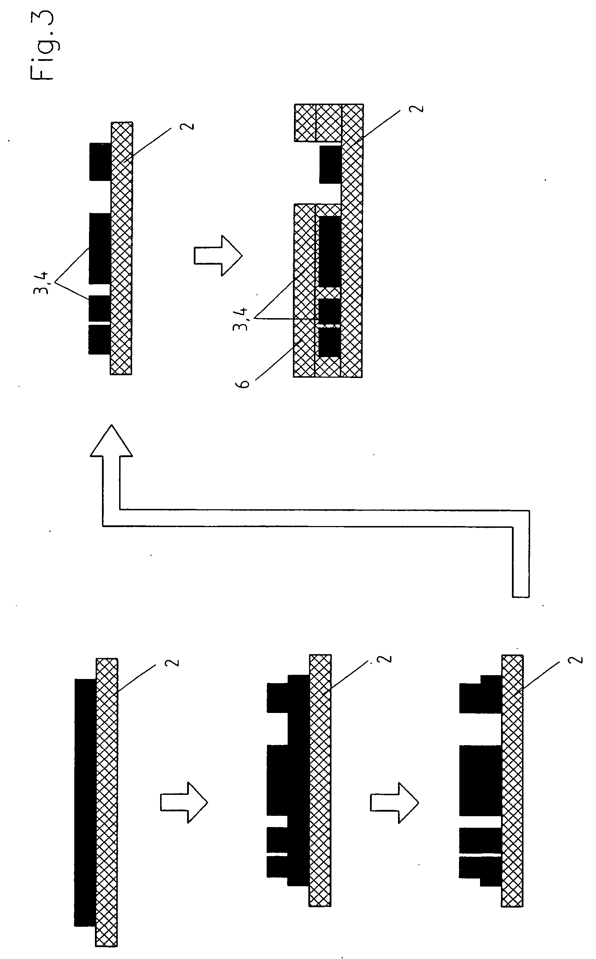

In Figur 3 sind die wichtigsten Schritte eines bevorzugten Verfahrens zur Herstellung eines erfindungsgemäßen kombinierten Sensor- und Heizelements 1 dargestellt. In einem ersten Verfahrensschritt wird eine flexible Trägerfolie 2, beispielsweise aus Pl (Polyimid), PET (Polyethylenterephthalat), PEN (Polyethylennaphthalat), mit einem Leiterbahnmaterial, beispielsweise einer Kupferfolie, belegt. Die Kupferfolie wird vorzugsweise auf das flexible Trägermaterial auflaminiert.

Anschließend wird das so hergestellte Basismaterial gereinigt und angeätzt. In einem nächsten Verfahrensschritt wird der Ätzresist in einem Muster aufgebracht, das dem gewünschten Leiterbild entspricht. In dem sich daran anschließenden Ätzprozeß wird das Leiterbahnmaterial mittels einer sauren Lösung in den von dem Ätzresist nicht bedeckten Bereichen bis zur Trägerfolie hinunter weggeätzt. Nach dem Entfernen des Ätzresist durch Strippen, das heißt durch Wegspülen mittels alkalischer Lösung, verbleibt das fertige Leiterbild aus dem Leiterbahnmaterial auf der Trägerfolie 2. Zum Schutz der Leiterbahnstruktur kann eine Schutzschicht 6, beispielsweise aus Kunststoffolie oder aus einer Vliesstofflage aufgebracht, vorzugsweise auflaminiert, werden.

## Patentansprüche

1. Kombiniertes Sensor- und Heizelement, insbesondere für den Sitz eines Kraftfahrzeugs, umfassend eine Sensormatte mit einer Heizleiteranordnung, **dadurch gekennzeichnet, dass** die Sensormatte als flexible Leiterbahnfolie ausgebildet ist, welche eine Trägerfolie (2) und auf der Oberfläche der Trägerfolie (2) angeordnete Leiterbahnen (4) einer Sensoranordnung umfasst, und dass die Heizleiter (3) der Heizleiteranordnung auf der gleichen Trägerfolienoberfläche (2) zwischen bzw. neben den Leiterbahnen (4) der Sensoranordnung angeordnet sind.

2. Kombiniertes Sensor- und Heizelement nach Anspruch 1, **dadurch gekennzeichnet, dass** die Sensoranordnung Sitzbelegungserkennungssensoren und/oder Temperatursensoren umfasst.

3. Kombiniertes Sensor- und Heizelement nach Anspruch 1 oder 2, **dadurch gekennzeichnet, dass** die Heizleiteranordnung mittels der Sitzbelegungserkennungssensoren schalt- und/oder steuerbar ist.

4. Kombiniertes Sensor- und Heizelement nach einem der Ansprüche 1 bis 3, **dadurch gekennzeichnet, dass** das Signal der Sitzbelegungssensoren zur Air-Bag-Steuerung einsetzbar ist.

5. Kombiniertes Sensor- und Heizelement nach einem der Ansprüche 1 bis 4, **dadurch gekennzeichnet, dass** die Sensoranordnung bzw. die Sitzbelegungserkennungssensoren Drucksensoren umfassen.

6. Kombiniertes Sensor- und Heizelement nach Anspruch 5, **dadurch gekennzeichnet, dass** die Drucksensoren sogenannte Folienschalter umfassen.

7. Kombiniertes Sensor- und Heizelement nach einem der Ansprüche 1 bis 6, **dadurch gekennzeichnet, dass** die Leiterbahnen (3, 4) für die Heizleiter- und die Sensoranordnung aus dem gleichen Werkstoff bestehen.

8. Kombiniertes Sensor- und Heizelement nach Anspruch 7, **dadurch gekennzeichnet, dass** die Leiterbahnen (3, 4) für die Heizleiter- und die Sensoranordnung aus Cu und/oder Leitpaste bestehen.

9. Kombiniertes Sensor- und Heizelement nach einem der Ansprüche 1 bis 8, **dadurch gekennzeichnet, dass** die Heizleiter- und Sensoranordnung mittels einer Schutzschicht (6) abgedeckt ist.

10. Kombiniertes Sensor- und Heizelement nach Anspruch 9, **dadurch gekennzeichnet, dass** die Schutzschicht (6) eine Kunststofffolie und/oder eine Vliesstofflage umfasst.

11. Kombiniertes Sensor- und Heizelement nach einem der Ansprüche 1 bis 10, **dadurch gekennzeichnet, dass** die Trägerfolie (2) eine flexible Kunststofffolie umfasst.

12. Kombiniertes Sensor- und Heizelement nach Anspruch 11, **dadurch gekennzeichnet, dass** die Kunststoffolie aus Polyimid PI, Polyethylenterephthalat PET oder Polyethylennaphthalat PEN besteht.

13. Kombiniertes Sensor- und Heizelement nach einem der Ansprüche 1 bis 12, **dadurch gekennzeichnet, dass** die elektrischen Anschlüsse (6, 7) der Heizleiter- und der Sensoranordnung auf der Trägerfolie (2) so angeordnet sind, dass sie an dem gleichen Anschlußstecker anschließbar sind.

14. Kombiniertes Sensor- und Heizelement nach einem der Ansprüche 1 bis 13, **dadurch gekennzeichnet, dass** die Heizleiter- und die Sensoranordnung an einer gemeinsamen Auswerte- und Versorgungselektronik anschließbar sind.

15. Kombiniertes Sensor- und Heizelement nach einem der Ansprüche 1 bis 14, **dadurch gekennzeichnet, dass** es eine Verdrahtung zur Auswerte- und Versorgungselektronik umfasst.

16. Kombiniertes Sensor- und Heizelement nach einem der Ansprüche 1 bis 15, **dadurch gekennzeichnet, dass** Dioden, Schalter und/oder Elektronikbauteile integriert sind.

17. Kombiniertes Sensor- und Heizelement nach einem der Ansprüche 1 bis 16, **dadurch gekennzeichnet, dass** das Sensor- und Heizelement (1) in unabhängig voneinander schalt-, steuer- oder regelbare Zonen unterteilt ist.

18. Fahrzeugsitz umfassend wenigstens ein kombiniertes Sensor- und Heizelement nach einem der Ansprüche 1 bis 17.

19. Fahrzeugsitz nach Anspruch 18, **dadurch gekennzeichnet, dass** auf der Sitzfläche und/oder der Lehne des Fahrzeugsitzes voneinander unabhängig schalt- und steuer- oder regelbare Heizzonen vorgesehen sind.

20. Fahrzeugsitz nach Anspruch 19, **dadurch gekennzeichnet, dass** die Heizzonen der Kontur eines auf dem Sitz befindlichen menschlichen Körpers angepasst sind.

21. Verfahren zur Herstellung eines kombinierten Sensor- und Heizelements nach einem der Ansprüche 1 bis 20, **dadurch gekennzeichnet, dass** die Leiterbahnstruktur wenigstens teilweise mittels eines Leitpastendruckverfahrens aufgebracht wird.

22. Verfahren zur Herstellung eines kombinierten Sensor- und Heizelements nach einem der Ansprüche 1 bis 20, **dadurch gekennzeichnet, dass** die Leiterbahnstruktur wenigstens teilweise mittels eines Prozesses mit den folgenden Prozessschritten aufgebracht wird:
a) Aufbringen einer Beschichtung aus dem Leiterbahnmaterial auf einen flexiblen Träger,
b) Aufbringen einer Ätzresistbeschichtung in einem Muster, das dem gewünschten Leiterbild entspricht, auf die Beschichtung aus Leiterbahnmaterial,
c) Wegätzen des Leiterbahnmaterials in den nicht beschichteten Bereichen, Entfernen der Ätzresistbeschichtung.

23. Verfahren nach Anspruch 21 oder 22, **dadurch gekennzeichnet, dass** das Leiterbild die Verdrahtung des kombinierten Sensor- und Heizelements zur Auswerte- und/oder Versorgungselektronik umfasst.

24. Verfahren nach einem der Ansprüche 21 bis 23, **dadurch gekennzeichnet, dass** das Leiterbahnmaterial auf den Träger auflaminiert wird.

25. Verfahren nach einem der Ansprüche 22 bis 24, **dadurch gekennzeichnet, dass** als Leiterbahnmaterial Cu verwendet wird.

26. Verfahren nach einem der Ansprüche 22 bis 25, **dadurch gekennzeichnet, dass** die Cu-Beschichtung vor dem Auftragen der Ätzresistbeschichtung gereinigt und angeätzt wird.

27. Verfahren nach einem der Ansprüche 22 bis 26, **dadurch gekennzeichnet, dass** die Ätzresistbeschichtung aufgedruckt wird.

28. Verfahren nach einem der Ansprüche 22 bis 27, **dadurch gekennzeichnet, dass** der Ätzresist durch Spülen mit einer alkalischen Lösung entfernt wird.

29. Verfahren nach einem der Ansprüche 21 bis 28, **dadurch gekennzeichnet, dass** auf die fertige Leiterbahnstruktur eine Schutzschicht aufgebracht wird.

30. Verfahren nach Anspruch 29, **dadurch gekennzeichnet, dass** die Schutzschicht auflaminiert wird.

31. Verfahren nach Anspruch 29 oder 30, **dadurch gekennzeichnet, dass** eine Schutzschicht aus einer Kunststofffolie und/oder aus Vliesstoff aufgebracht wird.

32. Verfahren nach einem der Ansprüche 21 bis 31, **dadurch gekennzeichnet, dass** als Trägerfolie eine Kunststofffolie aus Polyimid PI Polyethylenterephthalat PET oder Polyethylennaphthalat PEN verwendet wird.

## Claims

1. Combined sensor and heating element, in particular for the seat of a motor vehicle, comprising a sensor mat with a heating conductor arrangement, **characterized in that** the sensor mat is formed as a flexible conductor path film, which comprises a carrier film (2) and conductor paths (4) of a sensor arrangement that are arranged on the surface of the carrier film (2), and **in that** the heating conductors (3) of the heating conductor arrangement are arranged on the same carrier film surface (2) between or next to the conductor paths (4) of the sensor arrangement.

2. Combined sensor and heating element according to Claim 1, **characterized in that** the sensor arrangement comprises seat covering detection sensors and/or temperature sensors.

3. Combined sensor and heating element according to Claim 1 or 2, **characterized in that** the heating conductor arrangement can be switched and/or controlled by means of the seat covering detection sensors.

4. Combined sensor and heating element according to one of Claims 1 to 3, **characterized in that** the signal of the seat covering sensors can be used for airbag control.

5. Combined sensor and heating element according to one of Claims 1 to 4, **characterized in that** the sensor arrangement or the seat covering detection sensors comprise pressure sensors.

6. Combined sensor and heating element according to Claim 5, **characterized in that** the pressure sensors comprise what are known as membrane switches.

7. Combined sensor and heating element according to one of Claims 1 to 6, **characterized in that** the conductor paths (3, 4) for the heating conductor arrangement and the sensor arrangement consist of the same material.

8. Combined sensor and heating element according to Claim 7, **characterized in that** the conductor paths (3, 4) for the heating conductor arrangement and the sensor arrangement consist of Cu and/or conductive paste.

9. Combined sensor and heating element according to one of Claims 1 to 8, **characterized in that** the heating conductor arrangement and the sensor arrangement are covered by means of a protective layer (6),

10. Combined sensor and heating element according to Claim 9, **characterized in that** the protective layer (6) is a film of plastic and/or a layer of nonwoven material.

11. Combined sensor and heating element according to one of Claims 1 to 10, **characterized in that** the carrier film (2) comprises a flexible film of plastic.

12. Combined sensor and heating element according to Claim 11, **characterized in that** the film of plastic consists of polyimide Pl, polyethylene terephthalate PET or polyethylene naphthalate PEN.

13. Combined sensor and heating element according to one of Claims 1 to 12, **characterized in that** the electrical terminals (6, 7) of the heating conductor arrangement and the sensor arrangement are arranged on the carrier film (2) in such a way that they can be connected to the same connection plug.

14. Combined sensor and heating element according to one of Claims 1 to 13, **characterized in that** the heating conductor arrangement and the sensor arrangement can be connected to common evaluation and supply electronics.

15. Combined sensor and heating element according to one of Claims 1 to 14, **characterized in that** it comprises wiring to the evaluation and supply electronics.

16. Combined sensor and heating element according to one of Claims 1 to 15, **characterized in that** diodes, switches and/or electronic components are integrated.

17. Combined sensor and heating element according to one of Claims 1 to 16, **characterized in that** the sensor and heating element (1) is subdivided into zones that can be switched, controlled or regulated independently of one another.

18. Vehicle seat comprising at least one combined sensor and heating element according to one of Claims 1 to 17.

19. Vehicle seat according to Claim 18, **characterized in that** heating zones that can be switched and controlled or regulated independently of one another are provided on the seat surface and/or the backrest of the vehicle seat.

20. Vehicle seat according to Claim 19, **characterized in that** the heating zones are adapted to the contour of a human body sitting on the seat.

21. Method for producing a combined sensor and heating element according to one of Claims 1 to 20, **characterized in that** the conductor pattern is applied at least partially by means of a conductive paste printing process.

22. Method for producing a combined sensor and heating element according to one of Claims 1 to 20, **characterized in that** the conductor pattern is applied at least partially by means of a process with the following process steps:
a) applying a coating of the conductor path material to a flexible carrier,
b) applying an etching resist coating in a pattern that corresponds to the desired conductor pattern to the coating of conductor path material,
c) etching away the conductor path material in the non-coated regions, removing the etching resist coating.

23. Method according to Claim 21 or 22, **characterized in that** the conductor pattern comprises the wiring of the combined sensor and heating element to the evaluation and/or supply electronics.

24. Method according to one of Claims 21 to 23, **characterized in that** the conductor path material is laminated onto the carrier.

25. Method according to one of Claims 22 to 24, **characterized in that** Cu is used as the conductor path material.

26. Method according to one of Claims 22 to 25, **characterized in that** the Cu coating is cleaned and slightly etched before the application of the etching resist coating.

27. Method according to one of Claims 22 to 26, **characterized in that** the etching resist coating is printed on.

28. Method according to one of Claims 22 to 27, **characterized in that** the etching resist is removed by rinsing with an alkaline solution.

29. Method according to one of Claims 21 to 28, **characterized in that** a protective layer is applied to the finished conductor pattern.

30. Method according to Claim 29, **characterized in that** the protective layer is laminated on.

31. Method according to Claim 29 or 30, **characterized in that** a protective layer comprising a film of plastic and/or nonwoven material is applied.

32. Method according to one of Claims 21 to 31, **characterized in that** a film of plastic comprising polyimide PI, polyethylene terephthalate PET or polyethylene naphthalate PEN is used as the carrier film.

## Revendications

1. Elément combiné de détection et de chauffage, en particulier pour le siège d'un véhicule automobile, qui comprend un tapis de détection doté d'un système de conducteurs de chauffage, **caractérisé en ce que** le tapis de détection est configuré comme feuille conductrice flexible qui comprend une feuille de support (2) et des pistes conductrices (4) d'un système de détection disposées sur la surface de la feuille de support (2) et **en ce que** les conducteurs de chauffage (3) du système de conducteurs de chauffage sont disposés sur la même surface (2) de la feuille de support, entre les pistes conductrices (4) du système de détection ou à côté de celles-ci.

2. Elément combiné de détection et de chauffage selon la revendication 1, **caractérisé en ce que** le système de détection comprend des détecteurs de reconnaissance de l'occupation du siège et/ou des détecteurs de température.

3. Elément combiné de détection et de chauffage selon les revendications 1 ou 2, **caractérisé en ce que** le système de conducteurs de chauffage peut être commuté et/ou commandé au moyen des détecteurs de reconnaissance de l'occupation du siège.

4. Elément combiné de détection et de chauffage selon l'une des revendications 1 à 3, **caractérisé en ce que** le signal des détecteurs d'occupation du siège peut être utilisé pour la commande du coussin gonflable de sécurité,

5. Elément combiné de détection et de chauffage selon l'une des revendications 1 à 4, **caractérisé en ce que** le système de détection et les détecteurs de reconnaissance de l'occupation du siège comprennent des détecteurs de pression.

6. Elément combiné de détection et de chauffage selon la revendication 5, **caractérisé en ce que** les détecteurs de pression comprennent ce que l'on appelle des commutateurs en film.

7. Elément combiné de détection et de chauffage selon l'une des revendications 1 à 6, **caractérisé en ce que** les pistes conductrices (3, 4) du système de conducteurs de chauffage et du système de détection sont constituées du même matériau.

8. Elément combiné de détection et de chauffage selon la revendication 7, **caractérisé en ce que** les pistes conductrices (3, 4) du système de conducteurs de chauffage et du système de détection sont constituées de Cu et/ou d'une pâte conductrice.

9. Elément combiné de détection et de chauffage selon l'une des revendications 1 à 8, **caractérisé en ce que** le système de conducteurs de chauffage et le système de détection sont recouverts d'une couche de protection (6).

10. Elément combiné de détection et de chauffage selon la revendication 9, **caractérisé en ce que** la couche de protection (6) comprend une feuille de matière synthétique et/ou une couche de feutre.

11. Elément combiné de détection et de chauffage selon l'une des revendications 1 à 10, **caractérisé en ce que** la feuille de support (2) comprend une feuille flexible en matière synthétique.

12. Elément combiné de détection et de chauffage selon la revendication 11, **caractérisé en ce que** la feuille en matière synthétique est constituée de polyimide (Pl), de poly(téréphtalate d'éthylène) (PET) ou de poly(naphtalate d'éthylène) (PEN).

13. Elément combiné de détection et de chauffage selon l'une des revendications 1 à 12, **caractérisé en ce que** les raccordements électriques (6, 7) du système de conducteurs de chauffage et du système de détection sont disposés sur la feuille de support (2) de manière à pouvoir être raccordés à la même fiche de raccordement.

14. Elément combiné de détection et de chauffage selon l'une des revendications 1 à 13, **caractérisé en ce que** le système de conducteurs de chauffage et le système de détection peuvent être raccordés à une électronique commune d'évaluation et d'alimentation.

15. Elément combiné de détection et de chauffage selon l'une des revendications 1 à 14, **caractérisé en ce qu'**il comprend un câblage qui conduit à l'électronique d'évaluation et d'alimentation.

16. Elément combiné de détection et de chauffage selon l'une des revendications 1 à 15, **caractérisé en ce qu'**il intègre des diodes, des commutateurs et/ou des composants électroniques.

17. Elément combiné de détection et de chauffage selon l'une des revendications 1 à 16, **caractérisé en ce que** l'élément de détection et de chauffage (1) est divisé en zones qui peuvent être commutées, commandées ou régulées indépendamment les unes des autres.

18. Siège de véhicule qui comprend au moins un élément combiné de détection et de chauffage selon l'une des revendications 1 à 17.

19. Siège de véhicule selon la revendication 18, **caractérisé en ce qu'**il est doté sur sa surface d'assise et/ou sur le dossier du siège du véhicule de zones de chauffage qui peuvent être commutées et commandées ou régulées indépendamment les unes des autres.

20. Siège de véhicule selon la revendication 19, **caractérisé en ce que** les zones de chauffage sont adaptées au contour d'un corps humain présent sur le siège.

21. Procédé de fabrication d'un élément combiné de détection et de chauffage selon l'une des revendications 1 à 20, **caractérisé en ce que** la structure des pistes conductrices est appliquée au moins en partie au moyen d'un procédé d'impression de pâte conductrice.

22. Procédé de fabrication d'un élément combiné de détection et de chauffage selon l'une des revendications 1 à 20, **caractérisé en ce que** la structure des pistes conductrices est appliquée au moins en partie au moyen d'un procédé qui comprend les étapes suivantes :
(a) l'application d'un revêtement sur le matériau des pistes conductrices placé sur un support flexible,
(b) l'application sur le revêtement en matériau de piste conductrice d'un revêtement résistant au attaques chimiques, selon un motif qui correspond au motif souhaité des conducteurs,
(c) l'enlèvement du matériau de piste conductrice dans les zones non revêtues et enlèvement du revêtement résistant à l'attaque chimique.

23. Procédé selon les revendications 21 ou 22, **caractérisé en ce que** le motif de conducteurs comprend le câblage de l'élément combiné de détection et de chauffage vers l'électronique d'évaluation et/ou d'alimentation.

24. Procédé selon l'une des revendications 21 à 23, **caractérisé en ce que** le matériau des pistes conductrices est stratifié sur le support.

25. Procédé selon l'une des revendications 22 à 24, **caractérisé en ce que** l'on utilise du Cu comme matériau des pistes conductrices.

26. Procédé selon l'une des revendications 22 à 25, **caractérisé en ce que** le revêtement de Cu est nettoyé et gravé avant l'application du revêtement qui résiste à l'attaque chimique.

27. Procédé selon l'une des revendications 22 à 26, **caractérisé en ce que** le revêtement qui résiste à l'attaque chimique est imprimé.

28. Procédé selon l'une des revendications 22 à 27, **caractérisé en ce que** la résine résistante à l'attaque chimique est enlevée par lavage à l'aide d'une solution alcaline.

29. Procédé selon l'une des revendications 22 à 28, **caractérisé en ce qu'**une couche de protection est appliquée sur la structure de piste conductrice terminée.

30. Procédé selon la revendication 29, **caractérisé en ce que** la couche de protection est stratifiée.

31. Procédé selon les revendications 29 ou 30, **caractérisé en ce qu'**une couche de protection constituée d'une feuille de matière synthétique et/ou d'un feutre est appliquée.

32. Procédé selon l'une des revendications 21 à 31, **caractérisé en ce que** comme feuille de support, on utilise une feuille en matière synthétique de polyimide (PI), de poly(téréphtalate d'éthylène) (PET) ou de poly(naphtalate d'éthylène) (PEN).
